# EUROPEAN PATENT SPECIFICATION

(11) **EP 4 652 567 B1**
(45) Date of publication and mention of the grant of the patent: **29.04.2026**
(21) Application number: 23806326.7
(22) Date of filing: 17.11.2023
(51) Int. Cl.: G06T 7/62

(54) **VOLUME ESTIMATION IN LIQUID PROCESSING**
VOLUMENSCHÄTZUNG BEI DER FLÜSSIGKEITSVERARBEITUNG
ESTIMATION DE VOLUME DANS UN TRAITEMENT DE LIQUIDE

(30) Priority: 16.01.2023 WO PCT/CN2023/072306; 16.03.2023 EP 23162374
(43) Date of publication of application: 26.11.2025
(73) Proprietor: Versuni Holding B.V., 1082 MD Amsterdam (NL)
(72) Inventor: XIAO, Weimin, 5656 AE Eindhoven (NL); SUN, Wen, 5656 AE Eindhoven (NL); XU, Bo Jian, 5656 AE Eindhoven (NL); HAN, Lin, 5656 AE Eindhoven (NL)
(74) Representative: Vollering, Stefanus Franciscus Maria
(86) International application number: PCT/EP2023/082203
(87) International publication number: WO 2024/153365

(56) References cited:
- CN-A- 109 064 509
- CN-A- 111 568 180
- JP-A- H10 132 641
- US-A1- 2019 197 466
- US-A1- 2021 407 121
- US-A1- 2022 160 160
- US-B2- 11 478 766

## Description

### TECHNICAL FIELD OF THE INVENTION

The invention relates to a computer-implemented method, a non-transitory machine-readable medium and a liquid processing apparatus for estimating a volume of a processed liquid product.

### BACKGROUND OF THE INVENTION

There is a trend for kitchen appliances to increasingly implement enhanced (so-called "smart") functionality to fulfil growing a consumer need for improved monitoring and control of food and liquid preparation. In the case of a liquid processing apparatus such as a blender or juicer, a consumer may have a need for improved monitoring during use of the liquid processing apparatus. Some smart liquid processing apparatus may have a degree of capability to analyze the contents of the liquid processing apparatus. Such smart liquid processing apparatus may completely rely on artificial intelligence (AI) techniques in order to perform such an analysis. However, the computational cost of running such analysis is high, which increases the cost of purchasing and running the liquid processing apparatus for the consumer. Further, AI models require extensive training, increasing the cost of development. Some liquid processing apparatus may include a hardware component as part of a digital scale to measure the weight of the contents added to the liquid processing apparatus by the consumer. However, such a hardware component may increase the complexity of the liquid processing apparatus.

US 11 478 766 B2 discloses a blending system that includes a blender base and a container. The blender base includes a housing that houses a motor. The container is attachable to the blender base. The blending system includes a user device that communicates with the blender base. The user device may communicate with a remote computing device. The user device generates instructions and recipes for the blender base.

US 2022/160160 A1 discloses a smart juicer system that includes a juicer configured to make green vegetable juice by extracting juice from input ingredients. The juicer is further configured to generate juice extraction information including at least one of: time information about the juice extraction, identification information about the input ingredients subjected to the juice extraction, a recipe based on the juice extraction, and making conditions of the juice extraction. A terminal processing device includes a user interface for receiving an input about whether a user drinks green vegetable juice, a communication module for data communication with the juicer, and a terminal processor configured to generate information about the user's intake history of green vegetable juice based on the intake information and the juice extraction information obtained from the juicer through the communication module.

CN 111 568 180 A discloses a water dispenser display control method, a water dispenser and a computer readable storage medium. The method comprises the steps of: obtaining a container image of a container placed below the water outlet of the water dispenser; controlling the water dispenser to discharge water according to the container image, and acquiring water volume change information in the container; and generating a real-time water volume image according to the water volume change information, and projecting the real-time water volume image to the display screen.

JP H10 132641 A discloses a method of inspecting an amount of liquid filling a light-transmissible container with a shoulder part of nearly conical shape. The method comprises determining a boundary of a liquid level from an image obtained by shooting a shoulder part of the bottle, binarizing the image based on the threshold, obtaining an area of the liquid level from the image, and judging whether the area is within a specific allowable range or not. The bottle is judged to be a non-conforming article if the area is not within the allowable range.

### SUMMARY OF THE INVENTION

There are circumstances where there is a need to measure a quantity of contents in a container for a liquid processing apparatus. Whilst a component such as digital scale may be incorporated into a liquid processing apparatus to measure weight of the contents, the complexity of the liquid processing apparatus may be increased. Certain aspects or embodiments described herein relate to improving how to measure a quantity of contents in a container for a liquid processing apparatus. Certain aspects or embodiments may reduce or obviate certain problems associated with prior solutions.

In a first aspect of the invention, there is provided a computer-implemented method of estimating a volume of a processed liquid product in a kitchen liquid processing apparatus's container. The method comprises receiving first image data corresponding to a view of a top surface of the processed liquid product in the container after a first ingredient has been processed by the liquid processing apparatus. The method further comprises segmenting a portion of the first image data that corresponds to the top surface of the processed liquid product in the container from a background to the processed liquid product. The method further comprises determining a dimension of the segmented portion of the first image data. The method further comprises estimating a first volume of the processed liquid product based on the dimension, wherein the first volume is estimated according to a predetermined relationship between the dimension for a given top surface and a known volume of liquid held by the container for the given top surface.

Some embodiments relating to the first and other aspects are described below.

In some embodiments, the dimension comprises a length or area derived from the segmented portion.

In some embodiments, the portion is segmented by: determining an image parameter value of a pixel in a region of interest of the first image data; comparing the image parameter value with a threshold indicative of presence of the processed liquid product; and in response to the comparison indicating that the pixel corresponds to the processed liquid product, indicating that the pixel maps to the segmented portion.

In some embodiments, the threshold is identified based on one or more of: color and texture of the processed liquid product.

In some embodiments, the threshold is based on an average image parameter value in the region of interest of the first image data.

In some embodiments, the region of interest is identified in a reference image acquired when there are no ingredients in the container. The region of interest may correspond to a set of pixels that map to a reference component of the liquid processing apparatus that is no longer visible when the processed liquid product is present in the container.

In some embodiments, the reference component comprises one or more of: a seal for sealing the container, a blade of the liquid processing apparatus, or a support module for holding the blade in the container.

In some embodiments, the method further comprises: estimating the first volume of the processed liquid product; receiving input indicative of a type of the first ingredient; identifying, from a database, the nutritional information for the first ingredient; and determining nutrient content of the processed liquid product based on the identified nutritional information and the estimated first volume of the processed liquid product.

In some embodiments, the received input comprises additional image data corresponding to the view of the first ingredient acquired prior to processing the first ingredient, and wherein machine vision is used to determine the type of the first ingredient.

In some embodiments, the received input comprises user input indicative of the type of the first ingredient.

In some embodiments, the method further comprises receiving second image data corresponding to a view of a top surface of the processed liquid product in the container after a second ingredient has been processed by the liquid processing apparatus. The method may further comprise segmenting a portion of the second image data that corresponds to the top surface of the processed liquid product in the container from a background to the processed liquid product. The method may further comprise determining the dimension of the segmented portion of the second image data. The method may further comprise estimating a second volume of the processed liquid product based on the dimension, wherein the second volume is estimated according to the predetermined relationship.

In some embodiments, the method further comprises determining the nutrient content of the processed liquid product based on nutritional information for the second ingredient and the estimated second volume of the processed liquid product.

In some embodiments, the nutrient content of the processed liquid product is determined based on: the nutritional information for the first ingredient and the estimated first volume of the processed liquid product; and the nutritional information for the second ingredient and a volume difference between the estimated second volume and estimated first volume.

In a second aspect of the invention, there is provided a non-transitory machine-readable medium. The non-transitory machine-readable medium stores instructions readable and executable by a processor to implement the method of any one of the first aspect and related embodiments.

In a third aspect of the invention, there is provided a kitchen liquid processing apparatus for determining nutrient content of a processed liquid product. The liquid processing apparatus comprises: a container for receiving an ingredient; a blade for processing the ingredient in the container; a motor system for driving the cutting element; a camera for capturing images of the ingredient; and a controller. The controller is configured to implement the method of any one of the first aspect and related embodiments.

Certain aspects or embodiments described herein may provide various technical benefits such as: an improved technique for estimating a quantity, in particular volume, of a processed liquid product in a container; improved accuracy of estimating a volume of the processed liquid product while reducing the burden on the consumer (e.g., in terms of the level of user input); a reduced complexity for estimating a volume of the processed liquid product; and further technical benefits as discussed herein.

These and other aspects of the invention will be apparent from and elucidated with reference to the embodiment(s) described hereinafter.

### BRIEF DESCRIPTION OF DRAWINGS

Exemplary embodiments of the invention will now be described, by way of example only, with reference to the following drawings, in which:
FIG. 1 refers to a method of estimating a volume of a processed liquid product according to an embodiment;
FIG. 2 is a schematic drawing of liquid processing ecosystem according to an embodiment;
FIG. 3 is a schematic drawing of a liquid processing apparatus according to an embodiment;
FIGS. 4(A)-(D) are schematic drawings depicting stages of using a liquid processing apparatus;
FIGS. 5(A)-(C) are schematic drawings of a view an interior of a container of a liquid processing apparatus with or without contents in the container;
FIGS. 6(A)-(D) are schematic drawings of segmented image data representative of a view of an interior of a container of a liquid processing apparatus with successively increasing levels of contents in the container;
FIG. 7 refers to a method of determining nutrient content of a processed liquid product according to an embodiment;
FIG. 8 refers to a method of estimating a volume and nutrient content of a processed liquid product according to an embodiment;
FIG. 9 is a schematic drawing of a machine-readable medium for implementing various embodiments; and
FIG. 10 is a schematic drawing of apparatus for implementing various embodiments.

### DETAILED DESCRIPTION OF THE EMBODIMENTS

A consumer may have a need for improved measurement of a quantity of a processed liquid product in a container for a liquid processing apparatus. However, the complexity of measuring the quantity once an ingredient is in the container may be high. For example, a hardware component as part of a digital scale could be integrated with the liquid processing apparatus. In another example, AI techniques may be used to perform analysis. However, these example techniques involve a complex hardware and/or software implementation.

Therefore, an improved technique for measuring a quantity of a processed liquid product in a container for a liquid processing apparatus is needed.

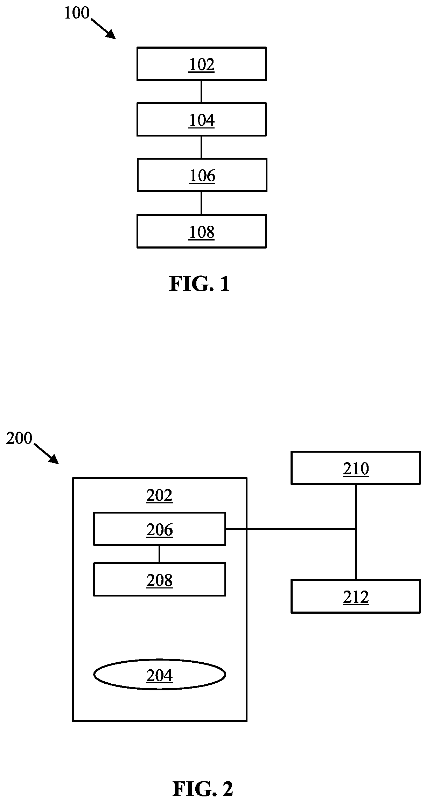

FIG. 1 refers to a computer-implemented method 100 of estimating a volume of a processed liquid product in a container for a liquid processing apparatus according to an embodiment. Liquid processing is implemented by the liquid processing apparatus such as a blender, juicer, etc. Such a liquid processing apparatus may be freestanding or handheld. Ingredients having a high liquid content such as fruit and vegetables may be liquid processed to release the liquid content to thereby produce a processed liquid product. Examples of such a processed liquid product include smoothie, juice or soup.

The method 100 may be implemented by, for example, an (electronic) processor of the liquid processing apparatus itself or another processor that is remote to the liquid processing apparatus, as described in more detail below. The blocks of the method 100 are described in more detail below.

The method 100 comprises, at block 102, receiving first image data corresponding to a view of the processed liquid product in the container after a first ingredient has been processed by the liquid processing apparatus.

The image data may be acquired by a camera, as described in more detail below. The image data may comprise a single image or a sequence of images. In some cases, the image data may comprise the raw imaging data acquired by the camera. In some cases, the image data may be image processed in some way (e.g., compressed or converted to another color space format). In some cases, the image data may be received by the processor implementing the method 100 directly from the camera whereupon the method 100 is implemented. In some cases, the image data may be stored in a memory (of the liquid processing apparatus itself or in another entity remote to the liquid processing apparatus) communicatively coupled to the processor. In such cases, the image data is received by the processor from the memory prior to the processor implementing the method 100.

The view of the processed liquid product may refer to the field of view of the camera. The interior wall of the container and other components of the liquid processing apparatus (such as a blade, seal, etc.) may be visible in the view at certain times. The camera is configured such that a change in the contents in the container is visible in the view. That is, as the container is filled up with ingredients during use by the consumer, the change may be registered by the image data.

The image data may comprise a set of image parameter values. Each image parameter value refers to a value such as intensity registered by a pixel of the camera. Each pixel maps to a certain location in the view. Thus, the camera may have a set of pixels and each of the set of pixels may register an image parameter value representative of the view at the time that the image is acquired. An image parameter value may refer to an intensity and/or color registered by the pixel. The image parameter value may represent an image parameter value under a color model such as the Red-Green-Blue (RGB) or YUV color model, or any other appropriate color model, where the parameter may be a color component (or color axis) of the color model.

In use of the liquid processor apparatus, a consumer may add a first ingredient or cause a first ingredient to be added into the container. The ingredients added into the container may be a solid (such as a fruit or vegetable) or liquid (such as juice, water, stock, etc.) although reference is made throughout this disclosure to the ingredients added into the container being initially in solid form. After the first ingredient has been liquid processed from solid form into liquid form, an image of the liquid processed first ingredient visible in the view may be acquired by the camera. The corresponding first image data is then received according to block 102. The term "first" does not imply that no other images are acquired prior to the first image data. In some cases, other image data may be acquired prior to the first image data, as explained below.

The method 100 further comprises, at block 104, segmenting a portion of the first image data that corresponds to a surface level of the processed liquid product in the container from a background to the processed liquid product.

When the first ingredient has been processed into liquid form, the surface of the processed liquid product may be level (or substantially level depending on the resulting texture of the surface resulting from any bubbles, fibers, etc., that are present). A portion of the first image data (corresponding to a subset of the set of pixels of the camera) maps to the area (i.e., at the surface level) of the processed liquid product visible in the view. A segmentation procedure may be implemented to distinguish between the subset of pixels that map to the portion (i.e., the processed liquid product) and the remaining subset of pixels that map to the background (e.g., any visible interior wall of the container or any other components of the liquid processing apparatus). Such a segmentation procedure may be based on a non-AI-based technique such as based on Otsu's method (for automatic image thresholding) or AI-based techniques. Some implementations of the segmentation procedure using image thresholding are described below.

The method 100 further comprises, at block 106, determining a dimension of the surface level of the processed liquid product in the container from the segmented portion of the first image data.

The size of the segmented portion (or the size of the image around the segmented portion) is indicative of how much processed liquid product is in the container. As the container is filled with the processed liquid product, the angular size of the segmented portion changes in the image data (i.e., if the container contains a different volume after the last image was acquired). Thus, it is possible to determine how much processed liquid product is in the container based on the size of the segmented portion, as registered by the image data.

In some embodiments, the dimension comprises a length or area derived from the segmented portion. For example, the length may refer to a diameter of the segmented portion if the segmented portion is circular or another straight-line measurement from one edge to another edge of the segmented portion. An area may refer to the overall area of the segmented portion. In any case, the number of pixels which map to the length or area may be indicative of the size of the segmented portion. Thus, in some cases, determining the dimension may refer to determining a number of pixels (of the length or area) in the image data that are indicative of an angular size of the surface level of the processed liquid product that is apparent to the camera.

The method 100 further comprises, at block 108, estimating a first volume of the processed liquid product based on the dimension. The first volume is estimated according to a predetermined relationship between the dimension of a given surface level and a known volume of liquid held by the container for the given surface level.

The predetermined relationship may be established based on knowledge of the volume capacity of the container for a given surface level, which may be determined theoretically or experimentally. A transfer function corresponding to the predetermined relationship may be established, which indicates the volume held by the container for a given surface level. In other similar words, the dimension of the surface level of the processed liquid product in the container maps to a given volume. As the container is filled, the dimension changes and thereby indicates the volume held by the container according to the predetermined relationship.

In this manner, an improved technique for measuring a quantity (in this case, volume) of a processed liquid product in a container for a liquid processing apparatus is provided.

The method 100 and certain other embodiments described herein may provide one or more technical benefits such as described below, and which can be understood with reference to the overall disclosure.

A technical benefit of the method 100 and/or related embodiments may be that an improved technique for estimating the quantity, volume, of a processed liquid product is provided (e.g., due to the robustness and/or straightforward nature of the technique such as compared to prior solutions that rely on AI techniques or require a complex hardware component). A further technical benefit of the method 100 and/or related embodiments may be that the accuracy of estimating the volume of the processed liquid product is improved while reducing the burden on the consumer (e.g., in terms of the level of user input). A further technical benefit of the method 100 and/or related embodiments may be that the complexity of the hardware and/or software needed for estimating the volume of the processed liquid product may be reduced, as compared to prior solutions such as based on AI techniques or involving the use of additional hardware components. Kitchen appliances are increasingly becoming smarter to fulfil growing consumer needs. Such kitchen appliances may already include a camera for acquiring images. The method 100 and/or related embodiments may leverage an already available image-acquisition capability provided by a smart liquid processing apparatus to estimate the volume without needing to modify the hardware of the liquid processing apparatus. Thus, the method 100 and/or related embodiments may be implemented in a deployed liquid processing apparatus that is already in use by a consumer (e.g., by implementing a software or firmware update to install the functionality of the method 100 and/or related embodiments).

A potential application of estimating the volume of the processed liquid product may be to facilitate nutrient tracking and/or personalization of taste. The method 100 and/or related embodiments may facilitate such nutrient tracking and/or personalization of taste. The ability to determine a quantity of an ingredient that has been added to the container may be useful for the consumer since it may reduce the burden on the consumer in terms of tracking the quantity themselves (e.g., in case the consumer uses their own scale). The consumer may desire to know the nutrient content of the processed liquid product. The method 100 and/or related embodiments may facilitate an accurate estimation of the nutrient content of the processed liquid product based on the nutritional information (e.g., per unit volume) of the added ingredient. The nutritional information may be obtained by a food composition database such as the United States Department of Agriculture (USDA) National Nutrient Database for Standard Reference. Thus, in some cases, the method 100 and/or related embodiments may facilitate estimation of the amount of processed liquid product in the container so that nutrient content can be calculated without the need for a scale, which may reduce the burden on the consumer.

Some embodiments related to the method 100 are described below.

FIG. 2 is a schematic drawing of a liquid processing ecosystem 200 according to an embodiment. Certain embodiments described herein (e.g., method 100 and related embodiments) may be implemented in certain parts of the liquid processing ecosystem 200. The liquid processing ecosystem 200 depicts various devices and entities which may be deployed as part of the liquid processing ecosystem 200. Not every device or entity depicted may be needed in some scenarios, as explained below.

The ecosystem 200 comprises a liquid processing apparatus 202 for processing an ingredient 204 (e.g., the first ingredient and any other ingredients subsequently added). The liquid processing apparatus 202 comprises a controller 206 for monitoring and controlling the liquid processing. For example, the controller 206 may control a blade (not shown) of the liquid processing apparatus 202 (e.g., to control the cutting/blending/extracting process of the liquid processing apparatus 202). The controller 206 is communicatively coupled to a camera 208 for capturing images. The camera 208 is positioned such that a region of interest associated with the ingredient 204 is within a field of view of the camera 208. This particular configuration is an example. For example, the camera 208 may or may not be inside the liquid processing apparatus 202 but may still have the ingredient 204 within its field of view, even if the camera 208 is external to the liquid processing apparatus 202.

In some cases, the liquid processing ecosystem 200 comprises a cloud computing service 210 communicatively coupled to the controller 206. A cloud computing service 210 may provide data storage and/or data processing services. The cloud computing service 210 may provide computing resource where there is insufficient computing resource available in any connected devices. In some cases, the cloud computing service 210 may provide updates and other services for the liquid processing apparatus 202.

In some cases, the liquid processing ecosystem 200 comprises a user equipment 212 communicatively coupled to the controller 206. A user equipment 212 may refer to any computing device associated with a user (e.g., of the liquid processing apparatus 202). Examples of user equipment 212 include: a smartphone, smartwatch, tablet, Internet of Things (IoT) device, etc. In some cases, the user equipment 212 may be communicatively coupled to the cloud computing service 210.

Any one or combination of the controller 206, cloud computing service 210 and the user equipment 212 may be used to implement the method 100 and other embodiments described herein. For example, in some cases, the controller 206 may implement the method 100 and related embodiments. In this regard, the controller 206 may comprise an (electronic) processor (not shown) for implementing the computer-implemented method 100 and related embodiments. In other cases, a processor associated with the various devices and entities of the liquid processing ecosystem 200 may implement the method 100 and related embodiments.

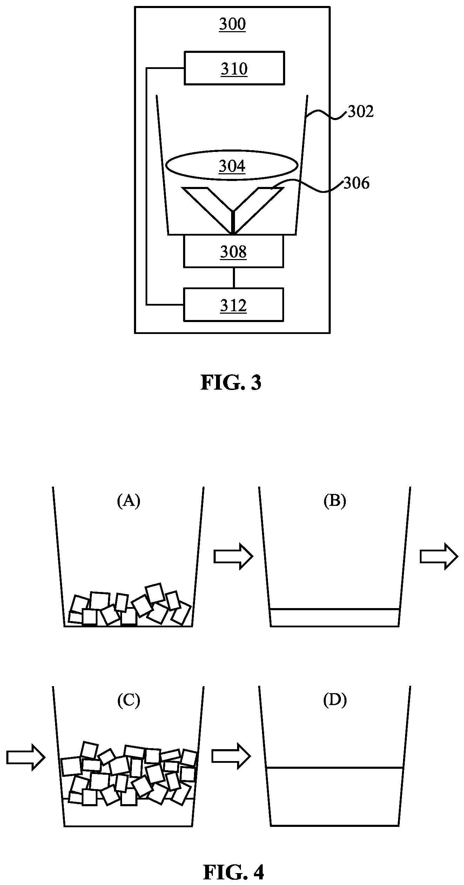

FIG. 3 is a schematic drawing of a liquid processing apparatus 300 for processing ingredients according to an embodiment. The liquid processing apparatus 300 may implement the functionality of certain embodiments described herein such as described in relation to the method 100 of FIG.1. Certain features of the liquid processing apparatus 300 may correspond to or have similar functionality to features of the liquid processing apparatus 202 of FIG. 2.

The liquid processing apparatus 300 comprises a container 302 for receiving an ingredient 304. The liquid processing apparatus 300 further comprises a blade 306 for processing (e.g., cutting/blending/extracting) the ingredient 304 in the container 302. The liquid processing apparatus 300 further comprises a motor system 308 for driving the blade 306. The liquid processing apparatus 300 may implement the functionality of a blender, juicer, etc. The liquid processing apparatus 300 further comprises a camera 310 for capturing images of the ingredient 304 (i.e., images of the "view" associated with the ingredient 304). In some cases, the camera 310 may be integrated into a lid (not shown) of the container 302 such that the camera 310 is positioned to image an interior of the container 302. In some cases, the camera 310 is positioned externally of the container 302 (e.g., mounted in a handle of the container 302 or external to the container 302). In any case, the camera 310 is configured to image the interior of the container 302.

The liquid processing apparatus 300 further comprises a controller 312 such as corresponding to the controller 206 of FIG. 2. In this embodiment, the controller 312 is configured to implement the method 100. In further embodiments, the controller 312 is configured to implement embodiments related to the method 100.

Thus, in the case of implementing the method 100, the controller 312 is configured to receive first image data corresponding to a view of the processed liquid product in the container after a first ingredient has been processed by the liquid processing apparatus 300.

The controller 312 is further configured to segment a portion of the first image data that corresponds to a surface level of the processed liquid product in the container 302 from a background to the processed liquid product.

The controller 312 is further configured to determine a dimension of the surface level of the processed liquid product in the container 302 from the segmented portion of the first image data.

The controller 312 is further configured to estimate a first volume of the processed liquid product based on the dimension. The first volume is estimated according to a predetermined relationship between the dimension of a given surface level and a known volume of liquid held by the container 302 for the given surface level.

Although FIG. 3 describes that the controller 312 of the liquid processing apparatus 300 implements the method 100, in some cases, other devices or entities (such as depicted by FIG. 2) may implement at least some of the functionality of the method 100 (and related embodiments).

FIGS. 4(A)-(D) are schematic drawings depicting stages of using a liquid processing apparatus for the method 100 and related embodiments. Reference is made to the liquid processing apparatus 300 of FIG. 3 in the following description. The depicted four stages (labeled A to D) of using the liquid processing apparatus 300 indicate the process of (A) adding a first ingredient to the container, (B) performing liquid processing, (C) adding a second ingredient to the container and (D) performing liquid processing again. Although two ingredients are added, fewer or more ingredients may be processed by the liquid processing apparatus, depending on consumer need.

In stage (A), the first ingredient is added to the container 302 by the consumer. In some cases, the type of first ingredient may be input by the user (e.g., via a user interface of the liquid processing apparatus or other user equipment associated with the consumer). In some cases, the type of first ingredient may be determined by acquiring an image of the first ingredient (prior to the first image data described in the method 100) and performing image recognition (e.g., using an AI technique such as based on a convolutional neural network trained to recognize types of ingredients) to determine the type.

In stage (B), the first ingredient is liquid processed until the (top) surface of the processed liquid product is level (i.e., flat or roughly flat). The camera 310 acquires an image corresponding to the view of the surface of the processed liquid product in the container 302. The acquired image corresponds to the first image data referred to in the method 100. The (first) volume of the processed liquid product may then be calculated in accordance with the method 100. The nutrient content of the processed liquid product may be determined based on the nutritional information for the type of the first ingredient (i.e., the nutrient content per unit volume) and the first volume.

The above stages are repeated for a second ingredient.

In stage (C), a second ingredient is added to the container 302 by the consumer. The volume and type of the second ingredient may be determined in the manner described in stage (A).

In stage (D), the second ingredient is liquid processed in the manner described in stage (B) and the overall volume of the resulting processed liquid product (i.e., the second volume) may be estimated. The volume corresponding to the second ingredient is determined by calculating the difference between the second volume estimated at stage D and the first volume estimated at stage B. Since the volume corresponding to each ingredient of the processed liquid product has been estimated and the nutritional information (nutrient content per unit volume) is known, the accumulated nutrient content of the processed liquid product can be determined. For example, the accumulated nutrient content may be determined by summing the nutrient content per unit volume for each of the added ingredients. The same principle is used for any number of ingredients providing an image is acquired and the volume estimated after each distinct ingredient is added to the container 302.

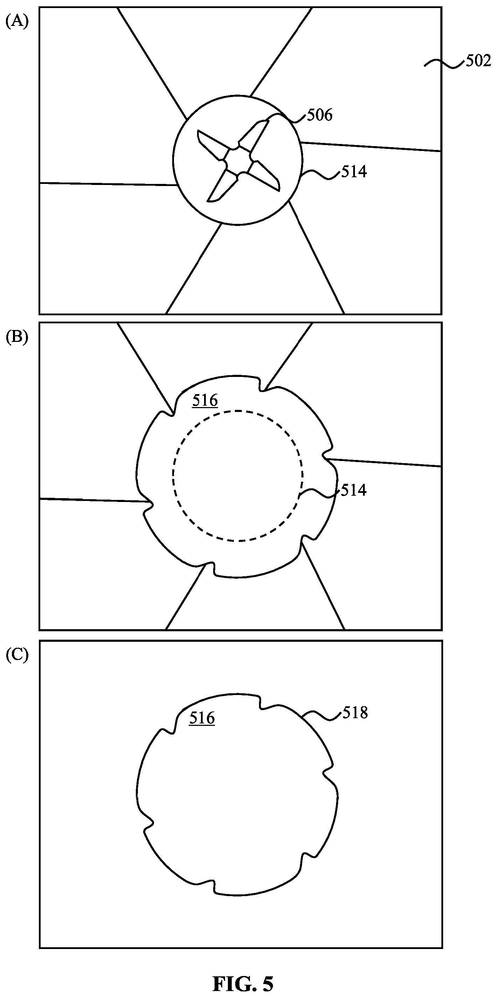

FIGS. 5(A)-(C) are schematic drawings of a view an interior of a container of a liquid processing apparatus with or without contents (i.e., processed liquid product) in the container. The image data as referred to herein is representative of the view such as depicted by FIG. 5. Reference numerals for features that are similar to or correspond to features of the liquid processing apparatus 300 of FIG. 3 are incremented by 200.

In each of FIGS. 5(A)-(C), the interior wall of the container 502 is visible since the camera (not shown) is positioned in the lid (not shown) of the container 502 and configured to image the bottom interior area and interior walls of the container 502. The depth of field of the camera may be controlled well so that the objects from the bottom to top of the container 502 in the image data are all clear to recognize. In this case, the wall of the container 502 includes undulations such that an interior cross-section of the container 502 in a plane perpendicular to the imaging axis of the camera is non-circular. This container shape is an example and other container shapes are possible. For example, the container 502 may be cylindrical, frustoconical or any other shape providing the camera can image a change in volume held by the container 502.

In FIG. 5(A), there are no contents in the container 502 such that the components of the liquid processing apparatus at the bottom of the container 502 are visible. In this case, a reference component 514 (e.g., a seal) at the bottom of the container 502 is visible. The reference component 514 may have a color (such as blue) that facilitates identification of a region of interest, as described in more detail below. As an example, the reference component 514 may comprise any component such as a seal for sealing the container 502, the blade 506 itself or a support module (not shown, but may comprise a bottom interior area of the container 502 when coupled to the container 502) for holding the blade 506 in the container 502 and coupling the blade 506 to the motor system (not shown) of the liquid processing apparatus.

In FIG. 5(B), processed liquid product 516 is present in the container 502. Assuming the processed liquid product 516 is opaque, the components at the bottom of the container 502 are no longer visible since they are masked by the area of the processed liquid product 516 at its surface level. The dashed line corresponds to the location of the reference component 514.

In FIG. 5(C), a portion 518 of the first image data that corresponds to the surface level of the processed liquid product 516 in the container 502 is segmented from the background to the processed liquid product 516. In this manner, the remaining features of the container 502 such as the undulations are no longer visible in the segmented image data. The pixels that map to the segmented portion 518 may be analyzed to determine the dimension (e.g., length or area). In the example of area, the total number of pixels that correspond to the segmented portion 518 correspond to the area. Hence, the number of pixels can be used to estimate the volume based on the predetermined relationship for the container 502.

An implementation for estimating the volume of the processed liquid product is now described with reference to FIG. 5.

An interior area at the bottom of the container 502 (see FIG. 5(A)) is within the view imaged by the camera. A region of interest in the image data may be defined which maps to the interior area at the bottom of the container. The visibility of a reference component (such as a colored seal) in the region of interest may indicate that the processed liquid product is not present in the container 502 (i.e., the container 502 is empty). When the processed liquid product 516 is present, the visibility of the reference component is reduced or completely obscured and the pixel intensity values for the set of pixels that would otherwise map to the region of interest are used to determine the threshold (e.g., a threshold image parameter value such as a pixel intensity value). A characteristic such as color, texture, etc., of the processed liquid product in the region of interest may therefore be used to determine the threshold for segmentation. Thus, a set of pixels which map to the reference component may define a region of interest within the image data. The appropriate threshold for the processed liquid product 516 may be determined based on the characteristic (e.g., color, texture) of the processed liquid product 516 when it is present in the container 502. For example, an average pixel intensity value of the pixels in the region of interest of the first image data may provide the threshold. In this manner, the threshold may be appropriately selected in response to processed liquid products that have a different color or other characteristic appearance (as a result of being made from different ingredients which have different colors).

Segmentation is performed (e.g., using the threshold as described above) on the image data acquired after each ingredient has been added (once liquid processing has been completed after adding the ingredient).

A transfer function (representative of the predetermined relationship) may be obtained between the size (e.g., pixel number corresponding to the dimension of the segmented portion 518) of the segmented portion 518 and the volume held by the container 502 for the given surface level. The surface level refers to the height of the processed liquid product 516 in the container 502. Thus, the height of the surface level of the processed liquid product 516 within the container 502 is related to the volume of the processed liquid product 516. In some cases, the transfer function may be obtained theoretically based knowledge of the interior shape of the container 502 and the expected size of the surface level for a given volume. In some cases, the transfer function may be obtained experimentally by taking images of different known volumes of liquid in the container 502 and fitting a curve to the resulting data (i.e., volume as function of the number of pixels corresponding to the segmented portion 518).

The volume of processed liquid product 516 in the container 502 can then be estimated based on the dimension (i.e., number of pixels corresponding to the length or area) derived from the segmented portion 518 of the image data and the transfer function. Providing there is a clear segmentation of the processed liquid product 516 (e.g., if the sides of the container 502 are not coated with the processed liquid product 516 and/or the surface of the processed liquid product 516 is uneven), the volume can be estimated with a high accuracy based on the transfer function (to less than a 3% error according to experiments). It is assumed that the position of the camera is fixed. It is also assumed that an appropriate threshold has been obtained for performing the segmentation.

Another implementation for estimating the volume of the processed liquid product 516 is now described. Some steps may be omitted depending on the implementation.

The received image data is in the YUV color space or is converted into the YUV color space. One color channel (e.g., the U-channel) is selected to obtain a single-color channel image (i.e., img-U). Other color spaces such as RGB, Lab and texture information could be used in a similar way to perform the same type of analysis.

If necessary, the resulting image, img-U, is filtered (e.g., with a Gaussian filter) to reduce noise (e.g., using a kernel of size 5x5 pixels) to obtain a filter image (i.e., img-gs).

The resulting image, img-gs, is binarized by using a suitable threshold (e.g., based on a characteristic of the processed liquid product 516 itself) to obtain the contour of the surface level of the processed liquid product 516. A binary image is obtained with the foreground pixels (corresponding to the pixels which map to the processed liquid product 516) having a pixel intensity value of 255 and the background pixels (corresponding to the pixels which map to the background to the processed liquid product) having a pixel intensity value of 0. Since the threshold is linked to a characteristic of the processed liquid product 516 such as color or texture, the threshold is determined based on the appearance of the processed liquid product. For example, color may affect the accuracy of the segmentation and therefore an average value based on the actual appearance (i.e., color) of the processed liquid product 516 may be used to determine the appropriate threshold. A region of interest corresponding to the bottom interior area of liquid processing apparatus may be predefined (e.g., by the manufacturer of the liquid processing apparatus) or determined based on the appearance of a reference component as described above. The average value of the image parameter values registered in the region of interest in e.g., the U channel may be used as the threshold. The contour of the surface level of the processed liquid product 516 may be obtained by segmentation based on the threshold.

Some embodiments relating to these implementations are now described.

Accordingly, in some embodiments the segmented portion 518 is segmented by: determining an image parameter value of a pixel in a region of interest of the first image data; comparing the image parameter value with a threshold indicative of presence of the processed liquid product 516; and in response to the comparison indicating that the pixel corresponds to the processed liquid product 516, indicating that the pixel maps to the segmented portion 518. The image parameter value may be any component from the YUV color space or any other appropriate color space. The classification of whether the pixel corresponds to either the surface of the processed liquid product 516 or the background may be based on a thresholding technique such as Otsu's method.

In some embodiments, the threshold is identified based on one or more of: color and texture of the processed liquid product.

In some embodiments, the threshold is based on an average image parameter value in the region of interest of the first image data. The term "average" may refer to the "mean," "median" or "mode."

In some embodiments, the region of interest is identified in a reference image acquired when there are no ingredients in the container 502. The region of interest corresponds to a set of pixels that map to a reference component of the liquid processing apparatus that is no longer visible when the processed liquid product 516 is present in the container 502.

In some embodiments, the reference component comprises one or more of: a seal for sealing the container 502, the blade 506 of the liquid processing apparatus, or a support module for holding the blade 506 in the container 502.

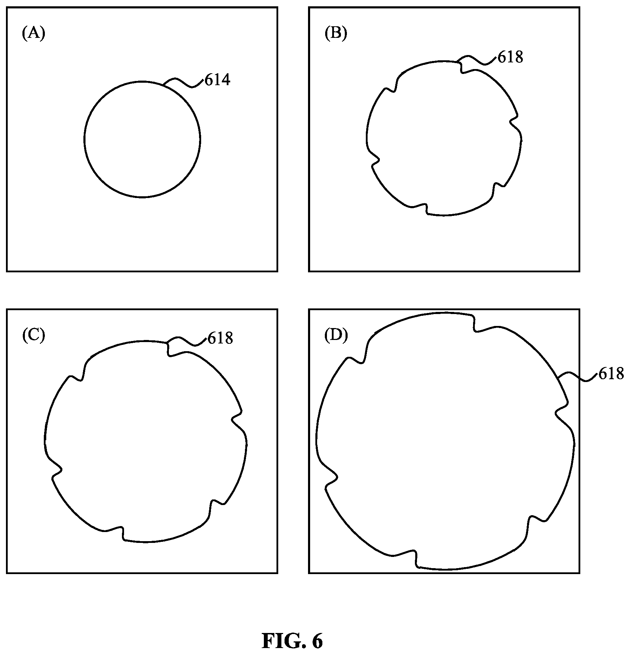

FIGS. 6(A)-(D) are schematic drawings of segmented image data representative of a view of an interior of a container of a liquid processing apparatus with successively increasing levels of processed liquid product in the container. FIG. 6(A) is representative of the view of the bottom interior area of the container before any ingredients have been added to the container. FIG. 6(A) corresponds to an image of a reference component 614 such as described in relation to FIG. 5(A). FIGS. 6(B)-(D) respectively correspond to the view when a first, second and third ingredient has been added to the container and liquid processed each time after adding each ingredient. That is, FIGS. 6(B)-(D) correspond to images of the processed liquid product after segmentation has been performed on the image. After each ingredient has been added, the level of the processed liquid product is increased, thereby increasing the size of the segmented portion 618, as depicted by the sequence of images represented by FIGS 6(B)-(D). The size of the segmented portion 618 may be used to derive the dimension used to estimate the volume based on the predetermined relationship (i.e., transfer function). The predetermined relationship may be validated by taking a set of images of the container filled with known volumes of liquid and using the determined dimension (e.g., number of pixels corresponding to the segmented portion 618) to check the accuracy. As noted above, the (relative) error has been found to be less than 3% using the above technique to establish the predetermined relationship.

Some further embodiments are described below.

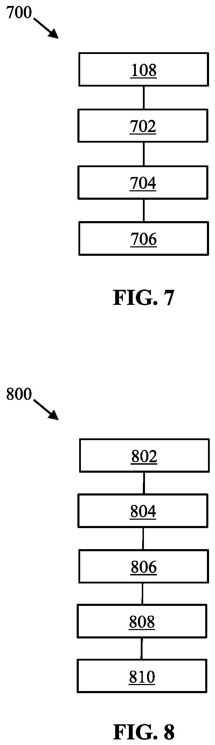

FIG. 7 refers to a method 700 of determining nutrient content of a processed liquid product according to an embodiment. The method 700 may be implemented in the same manner as described in relation to the method 100 (i.e., using the same processor). Where appropriate, certain blocks of the method 700 may be implemented in any order and are not limited to the order depicted by FIG. 7.

The method 700 comprises, at block 108, estimating the first volume of the processed liquid product (i.e., in accordance with the method 100).

The method 700 further comprises, at block 702, receiving input indicative of a type of the first ingredient. Such input may be based on user input or machine vision as described above.

The method 700 further comprises, at block 704, identifying, from a database, the nutritional information for the first ingredient. The database may provide nutritional information such as energy, fat, protein, vitamin and/or mineral content, etc., for the first ingredient per unit volume. The database may be accessible to the processor implementing the method 700 such as via the internet.

The method 700 further comprises, at block 706, determining nutrient content of the processed liquid product based on the identified nutritional information and the estimated first volume of the processed liquid product.

In some embodiments, the received input comprises additional image data corresponding to the view of the first ingredient acquired prior to processing the first ingredient. Machine vision may be used to determine the type of the first ingredient.

In some embodiments, the received input comprises user input indicative of the type of the first ingredient. Such user input may be entered via a user interface of the liquid processing apparatus or another user equipment such as a smartphone app.

FIG. 8 refers to a method 800 of estimating a volume and nutrient content of a processed liquid product according to an embodiment. The method 800 may be implemented in the same manner as described in relation to the method 100 (e.g., using the same processor). Where appropriate, certain blocks of the method 800 may be implemented in any order and are not limited to the order depicted by FIG. 8. The method 800 may be performed after performing the method 100.

The method 800 comprises, at block 802, receiving second image data corresponding to a view of the processed liquid product in the container after a second ingredient has been processed by the liquid processing apparatus.

The method 800 further comprises, at block 804, segmenting a portion of the second image data that corresponds to a surface level of the processed liquid product in the container from a background to the processed liquid product.

The method 800 further comprises, at block 806, determining the dimension of the surface level of the processed liquid product in the container from the segmented portion of the second image data.

The method 800 further comprises, at block 808, estimating a second volume of the processed liquid product based on the dimension. The second volume is estimated according to the predetermined relationship.

In some embodiments, the method 800 further comprises, at block 810, determining the nutrient content of the processed liquid product based on nutritional information for the second ingredient and the estimated second volume of the processed liquid product. Block 810 may be implemented to determine the nutrient content of the processed liquid product after the second ingredient has been added using the same functionality as described in relation to the method 700 (in relation to the first ingredient).

In some embodiments, the nutrient content of the processed liquid product is determined based on: the nutritional information for the first ingredient and the estimated first volume of the processed liquid product; and the nutritional information for the second ingredient and a volume difference between the estimated second volume (i.e., the total volume obtained from processing the first and second ingredient) and estimated first volume (obtained from processing just the first ingredient).

Embodiments relating to the segmentation procedure for the first image data may equally apply to the segmentation procedure for the second image data (and also any subsequent images). The principle of the embodiments may extend to adding any number of ingredients, providing each ingredient is added one-by-one and the volume estimation carried out based on a fresh image acquired after liquid processing is performed each time after adding each ingredient.

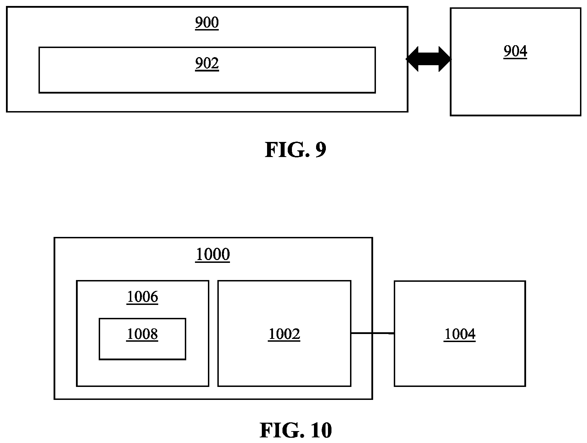

FIG. 9 is a schematic drawing of a non-transitory machine-readable medium 900 for implementing various embodiments described herein. As used herein, the term "non-transitory" does not encompass transitory propagating signals. The machine-readable medium 900 stores instructions 902 readable and executable by a processor 904 to implement the method of any of the embodiments described herein (e.g., method 100 and/or related embodiments). The machine-readable medium 900 and/or the processor 904 may be implemented by any of the controller 206, cloud computing service 210, user equipment 212 and/or controller 312 of Figures 2 or 3.

FIG. 10 is a schematic drawing of apparatus 1000 for implementing various embodiments described herein. The apparatus 1000 may be implemented by any of the controller 206, cloud computing service 210, user equipment 212 and/or controller 312 of Figures 2 or 3.

The apparatus 1000 comprises a processor 1002. The processor 1002 is configured to communicate with an interface 1004. The interface 1004 may be any interface (wireless or wired) implementing a communications protocol to facilitate exchange of data (e.g., image data, control instructions for the liquid processing apparatus, etc.) with other devices such as another part of the liquid processing ecosystem 200.

The apparatus 1000 further comprises a memory 1006 (e.g., non-transitory or otherwise) storing instructions 1008 readable and executable by the processor 1002 to implement various embodiments described herein (e.g., method 100 or any of the associated embodiments).

Any of the models described herein may be implemented by the processing circuitry for implementing the methods described herein. Thus, certain blocks of the methods may involve use of such models in order to provide the stated functionality. The models may be (machine learning) ML-based or non-ML-based. However, certain embodiments described herein refer to use of non-ML-based models, which may avoid the need to use extensive compute resources and/or enable local processing.

While the invention has been illustrated and described in detail in the drawings and foregoing description, such illustration and description are to be considered illustrative or exemplary and not restrictive; the invention is not limited to the disclosed embodiments.

Embodiments in the present disclosure can be provided as methods, systems or as a combination of machine-readable instructions and processing circuitry. Such machine-readable instructions may be included on a non-transitory machine (for example, computer) readable storage medium (including but not limited to disc storage, CD-ROM, optical storage, flash storage, etc.) having computer readable program codes therein or thereon.

The present disclosure is described with reference to flow charts and block diagrams of the method, devices, and systems according to embodiments of the present disclosure. It shall be understood that each block in the flow charts and/or block diagrams, as well as combinations of the blocks in the flow charts and/or block diagrams can be realized by machine-readable instructions.

The machine-readable instructions may, for example, be executed by a general-purpose computer, a special purpose computer, an embedded processor, or processors of other programmable data processing devices to realize the functions described in the description and diagrams. In particular, a processor or processing circuitry, or a module thereof, may execute the machine-readable instructions. Thus, functional modules of apparatus and other devices described herein may be implemented by a processor executing machine-readable instructions stored in a memory, or a processor operating in accordance with instructions embedded in logic circuitry. The term 'processor' is to be interpreted broadly to include a CPU, processing unit, ASIC, logic unit, or programmable gate array etc. The methods and functional modules may all be performed by a single processor or divided amongst several processors.

Such machine-readable instructions may also be stored in a computer readable storage that can guide the computer or other programmable data processing devices to operate in a specific mode.

Such machine-readable instructions may also be loaded onto a computer or other programmable data processing devices, so that the computer or other programmable data processing devices perform a series of operations to produce computer-implemented processing, thus the instructions executed on the computer or other programmable devices realize functions specified by block(s) in the flow charts and/or in the block diagrams.

Further, the teachings herein may be implemented in the form of a computer program product, the computer program product being stored in a storage medium and comprising a plurality of instructions for making a computer device implement the methods recited in the embodiments of the present disclosure.

In the claims, the word "comprising" does not exclude other elements or steps, and the indefinite article "a" or "an" does not exclude a plurality. A single processor or other unit may fulfil the functions of several items recited in the claims.

A computer program may be stored or distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A computer-implemented method (100) of estimating a volume of a processed liquid product in a kitchen liquid processing apparatus's container, the method comprising:
receiving (102) first image data corresponding to a view of a top surface of the processed liquid product in the container after a first ingredient has been processed by the liquid processing apparatus;
segmenting (104) a portion of the first image data that corresponds to the top surface of the processed liquid product in the container from a background to the processed liquid product;
determining (106) a dimension of the segmented portion of the first image data; and
estimating (108) a first volume of the processed liquid product based on the dimension, wherein the first volume is estimated according to a predetermined relationship between the dimension for a given top surface and a known volume of liquid held by the container for the given top surface.

2. The computer-implemented method of claim 1, wherein the dimension comprises a length or area of the segmented portion.

3. The computer-implemented method of any of claims 1 to 2, wherein the portion is segmented by:
determining an image parameter value of a pixel in a region of interest of the first image data;
comparing the image parameter value with a threshold indicative of presence of the processed liquid product; and
in response to the comparison indicating that the pixel corresponds to the processed liquid product, indicating that the pixel maps to the segmented portion.

4. The computer-implemented method of claim 3, wherein the threshold is identified based on one or more of: color and texture of the processed liquid product.

5. The computer-implemented method of any of claims 3 to 4, wherein the threshold is based on an average image parameter value in the region of interest of the first image data.

6. The computer-implemented method of any of claims 3 to 5, wherein the region of interest is identified in a reference image acquired when there are no ingredients in the container, and wherein the region of interest corresponds to a set of pixels that map to a reference component of the liquid processing apparatus that is no longer visible when the processed liquid product is present in the container.

7. The computer-implemented method of claim 6, wherein the reference component comprises one or more of: a seal for sealing the container (502), a blade (506) of the liquid processing apparatus, or a support module for holding the blade in the container.

8. The computer-implemented method (700) of any of claims 1 to 7, comprising:
estimating (108) the first volume of the processed liquid product;
receiving (702) input indicative of a type of the first ingredient;
identifying (704), from a database, the nutritional information for the first ingredient; and
determining (706) nutrient content of the processed liquid product based on the identified nutritional information and the estimated first volume of the processed liquid product.

9. The computer-implemented method of claim 8, wherein the received input comprises additional image data corresponding to the view of the first ingredient acquired prior to processing the first ingredient, and wherein machine vision is used to determine the type of the first ingredient.

10. The computer-implemented method of claim 8, wherein the received input comprises user input indicative of the type of the first ingredient.

11. The computer-implemented method (800) of any of claims 1 to 10, comprising:
receiving (802) second image data corresponding to a view of a top surface of the processed liquid product in the container after a second ingredient has been processed by the liquid processing apparatus;
segmenting (804) a portion of the second image data that corresponds to the top surface of the processed liquid product in the container from a background to the processed liquid product;
determining (806) a dimension of the segmented portion of the second image data; and
estimating (808) a second volume of the processed liquid product based on the dimension, wherein the second volume is estimated according to the predetermined relationship.

12. The computer-implemented method of claim 11, comprising determining (810) the nutrient content of the processed liquid product based on nutritional information for the second ingredient and the estimated second volume of the processed liquid product.

13. The computer-implemented method of claim 12, wherein the nutrient content of the processed liquid product is determined based on:
the nutritional information for the first ingredient and the estimated first volume of the processed liquid product; and
the nutritional information for the second ingredient and a volume difference between the estimated second volume and estimated first volume.

14. A non-transitory machine-readable medium (900) storing instructions (902) readable and executable by a processor (904) to implement the method of any one of claims 1 to 13.

15. A kitchen liquid processing apparatus (300) for determining nutrient content of a processed liquid product, the liquid processing apparatus comprising:
a container (302) for receiving an ingredient (304);
a blade (306) for processing the ingredient in the container;
a motor system (308) for driving the cutting element;
a camera (310) for capturing images of the ingredient; and
a controller (312) configured to:
receive first image data corresponding to a view of a top surface of the processed liquid product in the container after a first ingredient has been processed by the liquid processing apparatus;
segment a portion of the first image data that corresponds to the top surface of the processed liquid product in the container from a background to the processed liquid product;
determine a dimension of the segmented portion of the first image data; and
estimate a first volume of the processed liquid product based on the dimension, wherein the first volume is estimated according to a predetermined relationship between the dimension for a given top surface and a known volume of liquid held by the container for the given top surface.

## Patentansprüche

1. Computerimplementiertes Verfahren (100) zum Schätzen eines Volumens eines verarbeiteten flüssigen Produkts im Behälter einer Küchenflüssigkeitsverarbeitungseinrichtung, wobei das Verfahren Folgendes umfasst:
Empfangen (102) von ersten Bilddaten, die einer Ansicht einer oberen Oberfläche des verarbeiteten flüssigen Produkts im Behälter entsprechen, nachdem eine erste Zutat von der Flüssigkeitsverarbeitungseinrichtung verarbeitet wurde;
Segmentieren (104) eines Abschnitts der ersten Bilddaten, der der oberen Oberfläche des verarbeiteten flüssigen Produkts im Behälter von einem Hintergrund zum verarbeiteten flüssigen Produkt entspricht;
Bestimmen (106) einer Dimension des segmentierten Abschnitts der ersten Bilddaten; und
Schätzen (108) eines ersten Volumens des verarbeiteten flüssigen Produkts basierend auf der Dimension, wobei das erste Volumen gemäß einer vorbestimmten Beziehung zwischen der Dimension für eine gegebene obere Oberfläche und einem bekannten Volumen von Flüssigkeit, die von dem Behälter für die gegebene obere Oberfläche gehalten wird, geschätzt wird.

2. Computerimplementiertes Verfahren nach Anspruch 1, wobei die Dimension eine Länge oder Fläche des segmentierten Abschnitts umfasst.

3. Computerimplementiertes Verfahren nach einem der Ansprüche 1 oder 2, wobei der Abschnitt segmentiert wird durch:
Bestimmen eines Bildparameterwerts eines Pixels in einer Region von Interesse der ersten Bilddaten;
Vergleichen des Bildparameterwerts mit einem Schwellenwert, der Anwesenheit des verarbeiteten flüssigen Produkts angibt; und
als Reaktion darauf, dass der Vergleich angibt, dass der Pixel dem verarbeiteten flüssigen Produkt entspricht, Angeben, dass das Pixel den segmentierten Bereich abbildet.

4. Computergestütztes Verfahren nach Anspruch 3, wobei der Schwellenwert basierend auf einem oder mehrerem identifiziert wird von: Farbe und Textur des verarbeiteten flüssigen Produkts.

5. Computerimplementiertes Verfahren nach einem der Ansprüche 3 oder 4, wobei der Schwellenwert auf einem durchschnittlichen Bildparameterwert in der Region von Interesse der ersten Bilddaten basiert.

6. Computerimplementiertes Verfahren nach einem der Ansprüche 3 bis 5, wobei die Region von Interesse in einem Referenzbild identifiziert wird, das aufgenommen wurde, als sich keine Zutaten im Behälter befanden, und wobei die Region von Interesse einem Satz von Pixeln entspricht, der eine Referenzkomponente der Flüssigkeitsverarbeitungseinrichtung abbildet, die nicht mehr sichtbar ist, wenn das verarbeitete flüssige Produkt im Behälter anwesend ist.

7. Computerimplementiertes Verfahren nach Anspruch 6, wobei die Referenzkomponente eines oder mehreres umfasst von: einer Dichtung zum Abdichten des Behälters (502), einer Klinge (506) der Flüssigkeitsverarbeitungseinrichtung oder eines Stützmoduls zum Halten der Klinge im Behälter.

8. Computerimplementiertes Verfahren (700) nach einem der Ansprüche 1 bis 7, umfassend:
Schätzen (108) des ersten Volumens des verarbeiteten flüssigen Produkts;
Empfangen (702) von Eingabe, die einen Typ der ersten Zutat angibt;
Identifizieren (704) der Nährwertangaben für die erste Zutat aus einer Datenbank;
und
Bestimmen (706) von Nährstoffgehalt des verarbeiteten flüssigen Produkts basierend auf den identifizierten Nährwertangaben und dem geschätzten ersten Volumen des verarbeiteten flüssigen Produkts.

9. Computerimplementiertes Verfahren nach Anspruch 8, wobei die empfangene Eingabe zusätzliche Bilddaten umfasst, die der Ansicht der ersten Zutat entsprechen, die vor Verarbeitung der ersten Zutat erfasst wurde, und wobei maschinelles Sehen verwendet wird, um den Typ der ersten Zutat zu bestimmen.

10. Computerimplementiertes Verfahren nach Anspruch 8, wobei die empfangene Eingabe Benutzereingabe umfasst, die den Typ der ersten Zutat angibt.

11. Computerimplementiertes Verfahren (800) nach einem der Ansprüche 1 bis 10, umfassend:
Empfangen (802) von zweiten Bilddaten, die einer Ansicht der oberen Oberfläche des verarbeiteten flüssigen Produkts im Behälter entsprechen, nachdem eine zweite Zutat von der Flüssigkeitsverarbeitungsanlage verarbeitet wurde;
Segmentieren (804) eines Abschnitts der zweiten Bilddaten, der der oberen Oberfläche des verarbeiteten flüssigen Produkts im Behälter von einem Hintergrund zum verarbeiteten flüssigen Produkt entspricht;
Bestimmen (806) einer Dimension des segmentierten Abschnitts der zweiten Bilddaten; und
Schätzen (808) eines zweiten Volumens des verarbeiteten flüssigen Produkts basierend auf der Dimension, wobei das zweite Volumen gemäß der vorbestimmten Beziehung geschätzt wird.

12. Computergestütztes Verfahren nach Anspruch 11, umfassend Bestimmen (810) des Nährstoffgehalts des verarbeiteten flüssigen Produkts basierend auf Nährwertangaben für die zweite Zutat und dem geschätzten zweiten Volumen des verarbeiteten flüssigen Produkts.

13. Computergestütztes Verfahren nach Anspruch 12, wobei der Nährstoffgehalt des verarbeiteten flüssigen Produkts bestimmt wird basierend auf:
den Nährwertangaben für die erste Zutat und dem geschätzten ersten Volumen des verarbeiteten flüssigen Produkts; und
den Nährwertangaben für die zweite Zutat und einer Volumendifferenz zwischen dem geschätzten zweiten Volumen und dem geschätzten ersten Volumen.

14. Nichtflüchtiges, maschinenlesbares Medium (900), das Anweisungen (902) speichert, die von einem Prozessor (904) gelesen und ausgeführt werden können, um das Verfahren nach einem der Ansprüche 1 bis 13 zu implementieren.

15. Küchenflüssigkeitsverarbeitungseinrichtung (300) zum Bestimmen von Nährstoffgehalt eines verarbeiteten flüssigen Produkts, wobei die Flüssigkeitsverarbeitungseinrichtung Folgendes umfasst:
einen Behälter (302) zum Aufnehmen einer Zutat (304);
eine Klinge (306) zum Verarbeiten der Zutat im Behälter;
ein Motorsystem (308) zum Antreiben des Schneidelements;
eine Kamera (310) zum Aufnehmen von Bildern der Zutat; und
eine Steuereinheit (312), die konfiguriert ist zum:
Empfangen von ersten Bilddaten, die einer Ansicht einer oberen Oberfläche des verarbeiteten flüssigen Produkts im Behälter entsprechen, nachdem eine erste Zutat von der Flüssigkeitsverarbeitungseinrichtung verarbeitet wurde;
Segmentieren eines Abschnitts der ersten Bilddaten, der der oberen Oberfläche des verarbeiteten flüssigen Produkts im Behälter von einem Hintergrund zum verarbeiteten flüssigen Produkt entspricht;
Bestimmen einer Dimension des segmentierten Abschnitts der ersten Bilddaten; und
Schätzen eines ersten Volumens des verarbeiteten flüssigen Produkts basierend auf der Dimension, wobei das erste Volumen gemäß einer vorbestimmten Beziehung zwischen der Dimension für eine gegebene obere Oberfläche und einem bekannten Volumen von Flüssigkeit, die von dem Behälter für die gegebene obere Oberfläche gehalten wird, geschätzt wird.

## Revendications

1. Procédé mis en œuvre par ordinateur (100) d'estimation du volume d'un produit liquide traité dans le récipient d'un appareil de traitement de liquide de cuisine, le procédé comprenant :
la réception (102) des premières données d'image correspondant à une vue d'une surface supérieure du produit liquide traité dans le récipient après qu'un premier ingrédient a été traité par l'appareil de traitement de liquide ;
la segmentation (104) d'une partie des premières données d'image qui correspond à la surface supérieure du produit liquide traité dans le récipient, d'un arrière-plan au produit liquide traité ;
la détermination (106) d'une dimension de la partie segmentée des premières données d'image ; et
l'estimation (108) d'un premier volume du produit liquide traité sur la base de la dimension, dans lequel le premier volume est estimé selon une relation prédéterminée entre la dimension d'une surface supérieure donnée et un volume connu de liquide contenu dans le récipient pour la surface supérieure donnée.

2. Procédé mis en œuvre par ordinateur selon la revendication 1, dans lequel la dimension comprend une longueur ou une aire de la partie segmentée.

3. Procédé mis en œuvre par ordinateur selon l'une quelconque des revendications 1 à 2, dans lequel la partie est segmentée en :
déterminant une valeur de paramètre d'image d'un pixel dans une région d'intérêt des premières données d'image ;
comparant la valeur de paramètre d'image à un seuil indicatif de la présence du produit liquide traité ; et
en réponse à la comparaison indiquant que le pixel correspond au produit liquide traité, indiquant que le pixel correspond à la partie segmentée.

4. Procédé mis en œuvre par ordinateur selon la revendication 3, dans lequel le seuil est identifié sur la base d'une ou plusieurs parmi : une couleur et une texture du produit liquide traité.

5. Procédé mis en œuvre par ordinateur selon l'une quelconque des revendications 3 à 4, dans lequel le seuil est basé sur une valeur de paramètre d'image moyenne dans la région d'intérêt des premières données d'image.

6. Procédé mis en œuvre par ordinateur selon l'une quelconque des revendications 3 à 5, dans lequel la région d'intérêt est identifiée dans une image de référence acquise lorsqu'il n'y a pas d'ingrédients dans le récipient, et dans lequel la région d'intérêt correspond à un ensemble de pixels qui correspondent à un composant de référence de l'appareil de traitement de liquide qui n'est plus visible lorsque le produit liquide traité est présent dans le récipient.

7. Procédé mis en œuvre par ordinateur selon la revendication 6, dans lequel le composant de référence comprend un ou plusieurs parmi : un joint pour sceller le récipient (502), une lame (506) de l'appareil de traitement de liquide ou un module de support pour maintenir la lame dans le récipient.

8. Procédé mis en œuvre par ordinateur (700) selon l'une quelconque des revendications 1 à 7, comprenant :
l'estimation (108) du premier volume du produit liquide traité ;
la réception (702) d'une entrée indicative d'un type du premier ingrédient ;
l'identification (704), à partir d'une base de données, des informations nutritionnelles pour le premier ingrédient ; et
la détermination (706) d'une teneur en nutriments du produit liquide traité sur la base des informations nutritionnelles identifiées et du premier volume estimé du produit liquide traité.

9. Procédé mis en œuvre par ordinateur selon la revendication 8, dans lequel l'entrée reçue comprend des données d'image supplémentaires correspondant à la vue du premier ingrédient acquise avant le traitement du premier ingrédient, et dans lequel la vision machine est utilisée pour déterminer le type du premier ingrédient.

10. Procédé mis en œuvre par ordinateur selon la revendication 8, dans lequel l'entrée reçue comprend une entrée d'utilisateur indicative du type du premier ingrédient.

11. Procédé mis en œuvre par ordinateur (800) selon l'une quelconque des revendications 1 à 10, comprenant :
la réception (802) des secondes données d'image correspondant à une vue d'une surface supérieure du produit liquide traité dans le récipient après qu'un second ingrédient a été traité par l'appareil de traitement de liquide ;
la segmentation (804) d'une partie des secondes données d'image qui correspond à la surface supérieure du produit liquide traité dans le récipient, d'un arrière-plan au produit liquide traité ;
la détermination (806) d'une dimension de la partie segmentée des secondes données d'image ; et
l'estimation (808) d'un second volume du produit liquide traité sur la base de la dimension, dans lequel le second volume est estimé selon la relation prédéterminée.

12. Procédé mis en œuvre par ordinateur selon la revendication 11, comprenant une détermination (810) de la teneur en nutriments du produit liquide traité sur la base des informations nutritionnelles pour le second ingrédient et du second volume estimé du produit liquide traité.

13. Procédé mis en œuvre par ordinateur selon la revendication 12, dans lequel la teneur en nutriments du produit liquide traité est déterminée sur la base :
des informations nutritionnelles pour le premier ingrédient et du premier volume initial estimé du produit liquide traité ; et
des informations nutritionnelles du second ingrédient et d'une différence de volume entre le second volume estimé et le premier volume estimé.

14. Support non transitoire lisible par machine (900) stockant des instructions (902) lisibles et exécutables par un processeur (904) pour mettre en œuvre le procédé selon l'une quelconque des revendications 1 à 13.

15. Appareil de traitement de liquide de cuisine (300) pour déterminer une teneur en nutriments d'un produit liquide traité, l'appareil de traitement de liquide comprenant :
un récipient (302) destiné à recevoir un ingrédient (304) ;
une lame (306) pour traiter l'ingrédient dans le récipient ;
un système de moteur (308) pour entraîner l'élément de coupe ;
une caméra (310) pour capturer des images de l'ingrédient ; et
un dispositif de commande (312) configuré pour :
recevoir des premières données d'image correspondant à une vue d'une surface supérieure du produit liquide traité dans le récipient après qu'un premier ingrédient a été traité par l'appareil de traitement de liquide ;
segmenter une partie des premières données d'image qui correspond à la surface supérieure du produit liquide traité dans le récipient, d'un arrière-plan au produit liquide traité ;
déterminer une dimension de la partie segmentée des premières données d'image ; et
estimer un premier volume du produit liquide traité sur la base de la dimension, dans lequel le premier volume est estimé selon une relation prédéterminée entre la dimension d'une surface supérieure donnée et un volume connu de liquide contenu dans le récipient pour la surface supérieure donnée.
